# EUROPÄISCHE PATENTSCHRIFT

(11) **EP 2 817 922 B1**
(45) Veröffentlichungstag und Bekanntmachung des Hinweises auf die Patenterteilung: **13.04.2016**
(21) Anmeldenummer: 13705392.2
(22) Anmeldetag: 08.02.2013
(51) Int. Cl.: H04L 12/40, H04L 12/46

(54) **PROFINET ETHERNET ADAPTER**
PROFINET ETHERNET ADAPTER
ADAPTATEUR ETHERNET PROFINET

(30) Priorität: 22.02.2012 DE 102012003370
(43) Veröffentlichungstag der Anmeldung: 31.12.2014
(73) Patentinhaber: Phoenix Contact GmbH & Co. KG, 32825 Blomberg (DE)
(72) Erfinder: LESSMANN, Gunnar, 33039 Niehheim (DE)
(74) Vertreter: Blumbach Zinngrebe
(86) Internationale Anmeldenummer: PCT/EP2013/000377
(87) Internationale Veröffentlichungsnummer: WO 2013/124037

(56) Entgegenhaltungen:
- EP-A1- 1 906 601
- EP-A1- 2 410 697
- WO-A1-2006/136201

## Beschreibung

Die vorliegende Erfindung betrifft einen PROFINET Adapter gemäß Anspruch 1 mit wenigstens einer ersten und einer zweiten Ethernet-Schnittstelle zur Ankopplung eines Teilnehmers an ein PROFINET Netzwerk und ein Verfahren gemäß Anspruch 9.

PROFINET ist einer der führenden Industriestandards bei Echtzeit-Ethernet-Systemen (im englischen Realtime-Ethernet Systems, RTE). Der PROFINET Standard unterscheidet grundsätzlich zwei Möglichkeiten von Echtzeitkommunikationen, nämlich die Realtime Variante (PROFINET RT) und die Isochronous-Realtime Variante (PROFINET IRT). Beiden Varianten ist gemeinsam, dass zusätzlich zur Übertragung von Echtzeitdaten (RT oder IRT) mit einer hohen Bandbreite auch Nicht-Echtzeit-Daten (NRT-Daten) beispielsweise TCP/IP basierte Datenpakete über das PROFINET Netzwerk übertragen werden können. Ein PROFINET Netzwerk basiert in der Regel auf einer 100 MBit/s Voll-Duplex Übertragung über Ethernet Switches.

In der PROFINET RT Variante werden die Echtzeitdatenpakete zyklisch auf der ISO/OSI-Schicht 2 des Ethernet-Standards (MAC-Layer) übertragen. Die Echtzeitdatenpakete werden gegenüber den Nicht-Echtzeitdatenpaketen mit einer höheren Priorität in den Switches verarbeitet und übertragen. Damit ist sicher gestellt, dass die RT-Kommunikation vom Sender zum Empfänger vorrangig gegenüber der NRT-Kommunikation abgewickelt wird. Da in der PROFINET RT Variante die Datenübertragung nicht zeitlich korreliert stattfindet, entsteht auf dem Weg vom Sender zum Empfänger ein Jitter, der vor allem davon abhängt, bei wie vielen Switches auf dem Weg der Datenübertragung Pakete eingespeist werden. Die entsprechenden PROFINET RT Geräte bzw. Teilnehmer können mit Standard Ethernet Schnittstellen umgesetzt werden. Gleiches gilt für die Switches, die außer der Priorisierung keine besonderen Anforderungen erfüllen müssen.

Die Isochronous-Realtime (IRT) Variante stellt eine Erweiterung von PROFINET RT dar. Bei PROFINET IRT wird die Übertragung der Echtzeitdaten zeitlich geplant, wobei die Übertragung der IRT Daten in einem reservierten Zeitbereich stattfindet. Außerhalb dieses reservierten Zeitbereichs ist die Übertragung von NRT Daten wie bei PROFINET RT möglich. Bei PROFINET IRT ist der Jitter der Echtzeitdaten auf dem Weg vom Sender zum Empfänger geringer als bei PROFINET RT und ferner unabhängig davon, bei wie vielen Switches auf dem Weg der Datenübertragung Pakete eingespeist werden.

PROFINET IRT erfordert eine spezielle Ethernet Hardware in den Switches und den Geräten bzw. Teilnehmern. Damit können vorhandene Ethernet Schnittstellen nur eingeschränkt genutzt werden.

In beiden Varianten RT und IRT werden die PROFINET Teilnehmer durch einen symbolischen Namen, auch als PROFINET Gerätename bezeichnet, identifiziert. Dieser Name kann bei der Inbetriebnahme z.B. durch ein Softwarewerkzeug vergeben werden. Zusätzlich zu diesem Namen ist noch eine IP-Adresse notwendig, da Teile vom PROFINET Protokoll auf den IP-Layer des Ethernet-Standards aufsetzen. Die IP-Adresse dient zur Adressierung von NRT-Datenpaketen, die RT- und IRT- Datenpaketen werden üblicher Weise über die MAC-Adressen adressiert.

Die Teilnehmer in einem PROFINET Netzwerk werden bevorzugt in einer Linienstruktur miteinander vernetzt. Die Switches für die RT oder IRT Kommunikation werden in der Regel in die jeweiligen Teilnehmer integriert. Jeder der Teilnehmer verfügt dafür über PROFINET Adapter mit wenigstens einer ersten und einer zweiten Ethernet-Schnittstelle und einem integrierten RT/IRT Switch mit entsprechenden Speicher und CPU Ressourcen. Über diese zwei Ethernet-Schnittstellen wird jeder Teilnehmer mit seinem Vorgänger und seinem Nachfolger in dem linienförmigen Netzwerk verbunden. Jedem PROFINET Adapter wird neben seiner festen MAC-Adresse eine IP-Adresse sowie ein symbolischer PROFINET Name zugeordnet. Die Zuordnung von den IP-Adressen zu den symbolischen Namen einerseits und zu den MAC-Adressen andererseits kann über einen DHCP-Server (Dynamic Host Configuration Protocol) oder über das DCP (Discovery and Basic Configuration Protocol) des PROFINET Standards erfolgen.

Über einen PROFINET Protokoll-Stack in dem Adapter können verschieden Schnittstellen zur Anbindung eines jeweiligen Teilnehmers angesprochen werden. Ein PROFINET Adapter kann zum Beispiel eine I/O-Schnittstelle, eine serielle UART (Universal Asynchronous Receiver Transmitter) und/oder eine parallele Schnittstelle z.B. für einen Mikrokontroller bereitstellen. Die I/O-Schnittstellen setzen in der Regel Echtzeit I/O-Daten direkt in digitale Ein-/Ausgangssignale um, wobei die I/O-Daten als RT oder IRT Datenpaketen mit dem PROFINET ausgetauscht werden. Ein Mikrokontroller kann ausgebildet sein, sowohl Echtzeitdaten, als auch Nicht-Echtzeitdaten mit dem PROFINET auszutauschen.

Ein PROFINET Adapter kann beispielsweise auch Bestandteil einer Einsteckkarte sein, mit der ein Industrie PC über die zwei Ethernet Schnittstellen des Adapters an ein PROFINET Netzwerk angekoppelt werden kann. Der Einsteckkarte, d.h. dem Adapter wird über seinen symbolischen PROFINET Namen eine IP-Adresse zugeordnet, wobei eine Applikation auf dem PC in der Regel noch eine eigene IP-Adresse besitzt.
Der Austausch von NRT Daten erfolgt über TCP/IP basierte Datenpakete, die an die IP-Adresse des Adapters adressiert, der einem entsprechenden Teilnehmer zugeordnet ist.

Die Mikrokontroller bzw. die Industrie PC's besitzen häufig eine integrierte Ethernet Schnittstelle, die mit einem PROFINET Protokoll-Stack ausgerüstet, eine direkte TCP/IP basierte Kommunikation mit dem PROFINET Netzwerk ermöglicht. Dazu müsste die integrierte Ethernet Schnittstelle des Mikrokontrollers bzw. eines Industrie PC mit einer dritten Ethernet Schnittstelle verbunden werden, die vom Switch des jeweils zugeordneten PROFINET Adapters bereitgestellt wird.

Aus der WO 2006/136201 A1 ist ein Verfahren zur Datenkommunikation von Busteilnehmern eines offenen Automatisierungssystems bekannt, so dass der Anschluss beliebiger Busteilnehmer mit individueller, interaktiver Kommunikation mit Hilfe austauschbarer physikalischer Schnittstellen in einem Gerät ermöglicht wird. Dies geschieht durch eine Kopplung von untereinander über einen seriellen Datenbus kommunizierenden Busteilnehmern eines offenen Automatisierungssystems mit verteilter Steuerung, welche über einen Kommunikations-Controller mit einer übergeordneten Steuereinrichtung zusammenarbeiten. Nachteilig bei einer direkten Nutzung von TCP/IP Diensten ist, dass sich ein PROFINET Teilnehmer, der jeweils einen PROFINET Switch bzw. Adapter und einen Mikrokontroller bzw. eine Industrie PC umfasst, mit zwei unterschiedlichen IP-Adressen präsentiert, nämlich der IP-Adresse des Switches bzw. Adapters und der IP-Adresse des Mikrokontrollers bzw. des Industrie PC.

Die vorliegende Erfindung hat sich die Aufgage gestellt, eine direkte NRT-Kommunikation über TCP/IP mit einem an einen PROFINET Switch bzw. Adapter angeschlossenen Teilnehmer zu ermöglichen, die das Problem von zwei IP-Adressen für ein Gerät bzw. Teilnehmer vermeidet und das Anschalten von Komponenten mit Ethernetschnittstellen an RT bzw. IRT Netzwerke vereinfacht.

Diese Aufgabe wird durch einen PROFINET Adapter gemäß dem unabhängigen Anspruch 1 gelöst. Vorteilhafte Ausführungen sind Gegenstand der Unteransprüche.

Der PROFINET Adapter umfasst einen Switch mit wenigstens einer ersten und einer zweiten Ethernet-Schnittstelle zum Verbinden mit einem echtzeitfähigen PROFINET Netzwerk. Der Switch ist also zumindest geeignet, sowohl TCP/IP basierte PROFINET Datenpakete, TCP/IP Datenpakete, als auch PROFINET RT bzw. PROFINET IRT basierte Datenpakete zu empfangen und zu übertragen.

Der PROFINET Adapter umfasst des Weiteren einen PROFINET Protokoll-Stack und eine Anzahl von wenigstens einer Anwendungsschnittstelle.

Erfindungsgemäß besitzt der PROFINET Adapter ferner eine dritte Ethernet-Schnittstelle sowie eine Weiche. Die dritte Ethernet-Schnittstelle ist zumindest zum Austausch von ethernetbasierten Datenpaketen ausgebildet.

Die Weiche ist mit dem Switch, dem PROFINET Protokoll-Stack, den Anwendungsschnittstellen und der dritten Ethernet-Schnittstelle verbunden und dazu ausgebildet, Echtzeitdatenpakete und Nicht-Echtzeitdatenpakete entsprechend einer bestimmten Konfiguration aufzuteilen und zwischen dem Switch und den Anwendungsschnittstelle und/oder der dritten Ethernet-Schnittstelle zu übertragen. Eine erste der wenigstens einen Anwendungsschnittstelle kann eine I/O-Schnittstelle sein.

Eine I/O Schnittstelle kann für die Verarbeitung sowohl von sicheren, als auch von nicht sicheren Ein-/Ausgangssignale ausgebildet sein. An einem sichren Signaleingang kann zum Beispiel eine NOT-AUS Signal bereitgestellt werden, das parallel zu den ethernetbasierten Datenpaketen der dritten Ethernet-Schnittstelle im PROFINET Netzwerk übertragen werden kann.

Die Weiche ist vorzugsweise derart konfiguriert, ein Echtzeitdatenpaket oder die I/O Daten des Echtzeitdatenpaketes, das an den PROFINET Adapter adressiert ist, zwischen dem Switch und der I/O-Schnittstelle zu übertragen.

Die Weiche kann auch konfiguriert sein, ein an den PROFINET Adapter adressiertes Nicht-Echtzeitdatenpaket an die dritte Ethernet-Schnittstelle zu übertragen.

Das Nicht-Echtzeitdatenpaket kann ein ethernetbasiertes Datenpaket sein.

Unter einem ethernetbasiertes Datenpaket kann zum Beispiel ein TCP/IP, PROFINET und PROFINET RT/IRT Datenpaket verstanden werden.

Der PROFINET Adapter kann des Weiteren dazu ausgebildet sein, einem ethernetkommunikationsfähigen Gerät eine IP-Adresse zuzuweisen, wobei dieses Gerät an der dritten Ethernet-Schnittstelle anschließbar ist und wobei die IP-Adresse der IP-Adresse des PROFINET Adapters entspricht und/oder einem an der dritten Ethernet-Schnittstelle anschließbaren ethernetkommunikationsfähigen Gerät einen symbolischen Namen bzw. PROFINET Gerätenamen zuzuweisen, der dem eigenen PROFINET Gerätenamen entspricht.

Die Weiche kann somit ausgebildet sein, ein Nicht-Echtzeitdatenpaket von der dritten Ethernet-Schnittstelle an den Switch zu übertragen.

Die erfindungsgemäße Lösung umfasst ferner ein Verfahren nach Anspruch 9 zum Übertragen von Echtzeitdatenpaketen und Nicht-Echtzeitdatenpaketen zwischen einem Switch und wenigstens einer Anwendungsschnittstelle und/oder der dritten Ethernet-Schnittstelle eines zuvor beschrieben PROFINET Adapters.

Erfindungsgemäß werden die Echtzeitdatenpakete und die Nicht-Echtzeitdatenpakete durch eine Weiche aufgeteilt.

Die Echtzeitdatenpakete können durch die Weiche an die Anwendungsschnittstellen übertragen werden. Optional können die Echtzeitdatenpakete auch an die dritte Ethernet-Schnittstelle übertragen werden.

Die Nicht-Echtzeitdatenpakete werden vorzugsweise von dem Switch an die dritte Ethernet-Schnittstelle übertragen. Die Nicht-Echtzeitdatenpakete sind bevorzugt als ethernetbasierten Datenpakete ausgebildet.

Die Nicht-Echtzeitdatenpakete von der dritten Ethernet-Schnittstelle werden an dem Switch übertragen.

Eine IP-Adresse des PROFINET Adapters kann als Quell-Adresse für die Nicht-Echtzeitdatenpakete verwendet werden.

Ein Kern der Erfindung ist also eine Weiche, über die alle TCP/IP, PROFINET und PROFINET RT/IRT Datenpakete geleitet werden, die vom PROFINET Adapter kommen oder von diesem versendet werden. Der PROFINET Adapter steht mit der Weiche in Verbindung und wird über seine IP Adresse und/oder seine MAC-Adresse adressiert.

PROFINET RT Datenpakete können über die erfindungsgemäße Weiche frei konfigurierbar vom den Switch zu den Anwendungsschnittstellen, z.B. eine I/O-Schnittstelle oder eine Mikroprozessorschnittstelle, und/oder zum Ethernet Interface übertragen werden, in dem diese Datensenken durch die Weiche einzeln zu oder abgeschaltet werden.

PROFINET RT Datenpakete können umgekehrt auch von der I/O-Schnittstelle, der Mikroprozessorschnittstelle und der dritten Ethernet-Schnittstelle zum Switch übertragen werden, wobei die Weiche so konfigurierbar ist, dass alle Datenquellen einzeln zu oder abgeschaltet werden können. Darüber hinaus kann die Priorität dieser einzelnen Quellen konfiguriert werden. Echtzeitdatenpakete werden mit der MAC-Adresse des PROFINET Adapters versehen.

TCP/IP Datenpakete werden über die Weiche bevorzugt direkt zur dritten Ethernet-Schnittstelle übertragen. Alternativ können die Daten aus dem ethernetbasierten Datenpaket auch der Mikroprozessorschnittstelle zugeführt werden.

Die Erfindung wird nachfolgend anhand beispielhafter Ausführungsformen unter Bezugnahme der beigefügten Zeichnungen detailliert beschrieben. In den Zeichnungen zeigen:
- Fig. 1:: eine Anschaltung eines Industrie PC an ein PROFINET Netzwerk gemäß Stand der Technik,
- Fig. 2:: eine erste gemeinsame Anschaltung eines Industrie PC und eines PROFINET IO Geräts an ein PROFINET Netzwerk gemäß Stand der Technik,
- Fig. 3:: eine zweite gemeinsame Anschaltung eines Industrie PC und eines PROFINET IO Geräts an ein PROFINET Netzwerk gemäß Stand der Technik,
- Fig. 4:: eine Anschaltung eines PROFINET Geräts an ein PROFINET Netzwerk gemäß Stand der Technik,
- Fig. 5:: einen erfindungsgemäßen RPROFINET Adapter,
- Fig. 6:: eine gemeinsame Anschaltung eines Industrie PC und eines PROFINET IO Geräts an eine PROFINET Netzwerk mit einem erfindungsgemäßen RPROFINET Adapter,
- Fig. 7:: ein PROFINET Teilnehmer mit einem RPROFINET Adapter gemäß vorliegender Erfindung.

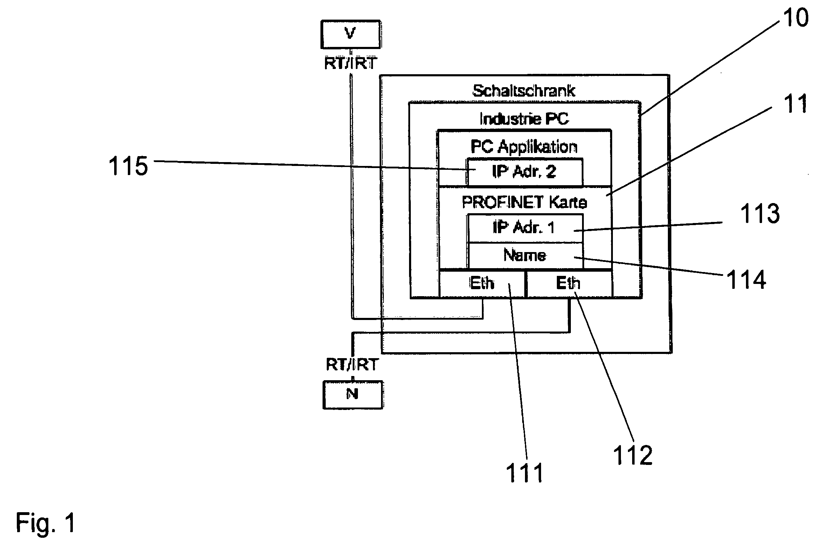

In der Figur 1 wird beispielhaft an einem Industrie PC eine Möglichkeiten der Anschaltung von Geräten an ein PROFINET Netzwerk dargestellt, wobei das Prinzip der Anschaltung aber auch für andere Gerätetypen gilt.

In der Automatisierungstechnik folgt die Installation in der Regel einer jeweiligen der Anlage, so dass ein PROFINET Netzwerk bevorzugt eine Linientopologie aufweist. Die Linienstruktur bzw. Linienverkabelung des Netzwerks wird dadurch gewährleistet, dass die für PROFINET notwendigen RT oder IRT Switches in die Teilnehmer integriert sind bzw. werden.

Der dargestellte Industrie PC 10 bildet zusammen mit der in einem Steckplatz eingeschobenen PROFINET Karte 11 einen PROFINET Teilnehmer. Die PROFINET Karte 11 umfasst einen RORFINET RT/IRT Switch, von dem eine erste Ethernet-Schnittstelle 111 und eine zweite Ethernet-Schnittstelle 112 bedient wird. Des Weiteren umfasst die PROFINET Karte 11 zum Beispiel eine PCI-Schnittstelle und bildet somit einen PROFINET Adapter, über den eine auf dem Industrie PC laufende Automatisierungsanwendung z.B. Nicht-Echtzeit-Daten (NRT-Daten) mittels TCP/IP Datenpaketen mit dem PROFINET Netzwerk austauschen kann.

Der PROFINET Karte 11 besitzt eine feste MAC-Adresse sowie einen zugeordneten symbolischen PROFINET Namen 114. Während einer Initialisierungsphase des PROFINET Netzwerks kann der Karte eine IP-Adresse 113 zum Beispiel von einem DHCP-Server zugewiesen werden.

Die erste und zweite Ethernet-Schnittstelle 111 und 112 der PROFINET Karte stellen einen wesentlichen Bestandteil zum Bereitstellen einer gewünschten Linienstruktur des PROFINET Netzwerks dar, in dem zum Beispiel mit der ersten Ethernet-Schnittstelle 111 eine Verbindung zu einem vorhergehenden Teilnehmer und mit der zweiten Ethernet-Schnittstelle 112 eine Verbindung zu einem nachfolgenden Teilnehmer des Netzwerks hergestellt wird.

Wie aus der Figur 1 zu erkennen ist, besitzt die Applikation auf dem Industrie PC eine eigene IP-Adresse 115.

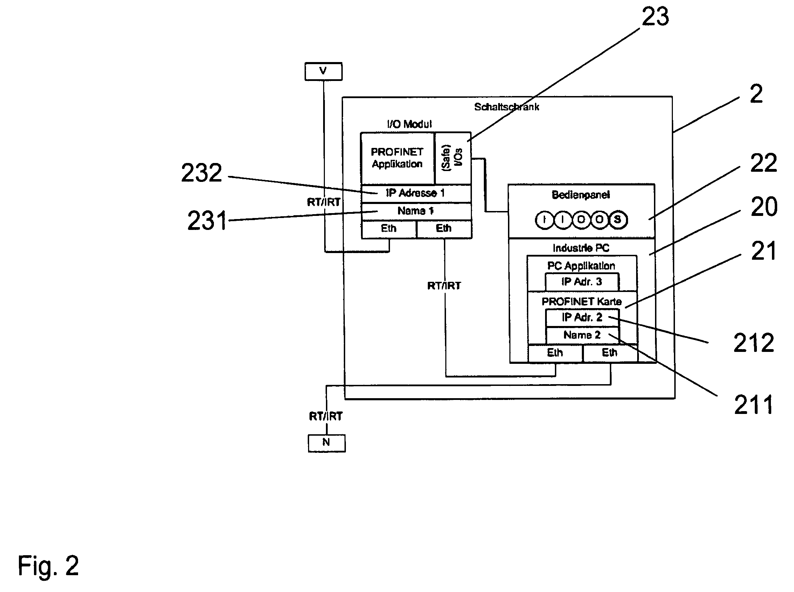

Die Figur 2 stellt einen Industrie PC 20 mit einer PROFINET Karte 21 dar, der gemeinsam mit einem PROFINET IO Gerät, das eine Bedientafel 22 und einen zugeordnet POFINET Adapter 23 umfasst, an einem PROFINET Netzwerk angeschlossen ist. Der PROFINET Karte 21 und dem PROFINET Adapter 23 ist jeweils ein symbolische PROFINET Name 211 und 231 sowie eine IP-Adresse 212 und 232 zugeordnet. Der PC und das IO Gerät stellen in einem gemeinsamen Gehäuse integriert für den Anwender nach außen ein gemeinsame Gerät bzw. eine gemeinsame Teilnehmereinheit 2 dar, obwohl sie aus Netzwerksicht zwei hintereinander geschalteten PROFINET Teilnehmern entsprechen.

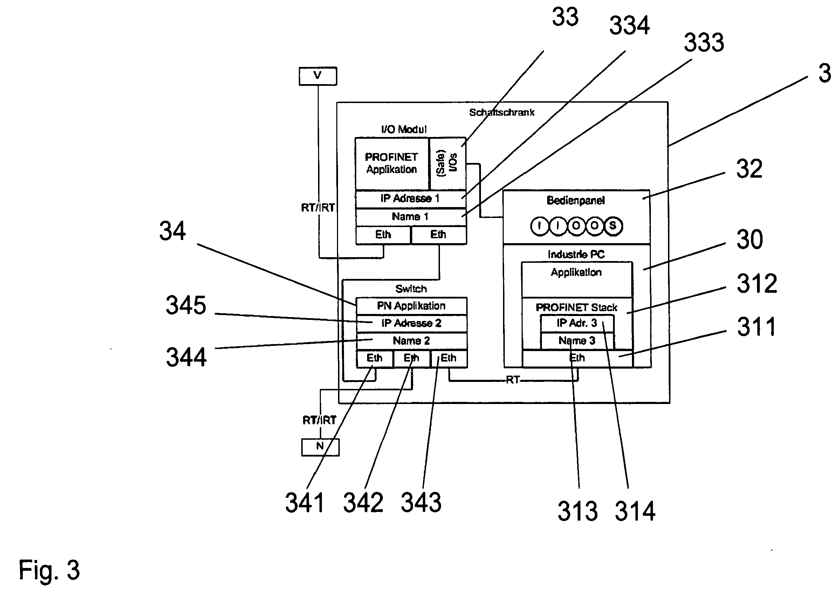

In der Figur 3 ist ein alternativer Aufbau einer in Figur 2 dargestellten Teilnehmereinheit dargestellt. Der Industrie PC 30 besitzt eine integrierte Ethernet-Schnittstelle 311. Auf dem Betriebssystem des Industrie PC ist ein PROFINET Protokoll Protokoll-Stack 312 installiert, so dass die Enternet-Schnittstelle 311, die in der Regel für ein TCP/IP basiertes LAN verwendet wird, als PROFINET Schnittstelle arbeitet. Dem PROFINET Protokoll-Stack 312 des Industrie PC ist ein symbolischer PROFINET Name 313 zugeordnet, über die eine IP-Adresse 314 an den Industrie PC bzw. an seinem PROFINET Protokoll-Stack vergeben wird.

Das PROFINET IO Gerät umfasst wiederum eine Bedientafel 32 und einen POFINET Adapter 33, dem ein symbolischer PROFINET Name 333 und eine IP-Adresse 334 zugeordnet ist. Der dargestellten Teilnehmereinheit 3 ist ein PROFINET Switch 34 zugeordnet, der drei Ethernet-Schnittstellen 341, 342 und 343 sowie einen symbolischen PROFINET Namen 344 und eine zugewiesene IP-Adresse 345 besitzt.

Der Industrie PC 30 ist über den PROFINET Switch 34 mit dem PROFINET Netzwerk verbunden, wobei der Switch 34 und der PROFINET Adapter 33 der Bedientafel 32 aus Netzwerksicht zwei hintereinander geschaltete PROFINET Teilnehmer darstellen.

Nachteilig bei einer jeweiligen Einbindung eines Industrie PC in ein PROFINET Netzwerk gemäß den Figuren 2 und 3 ist, dass Netzwerkseitig zwei symbolische PROFINET Namen und drei IP-Adressen verwaltet werden müssen.

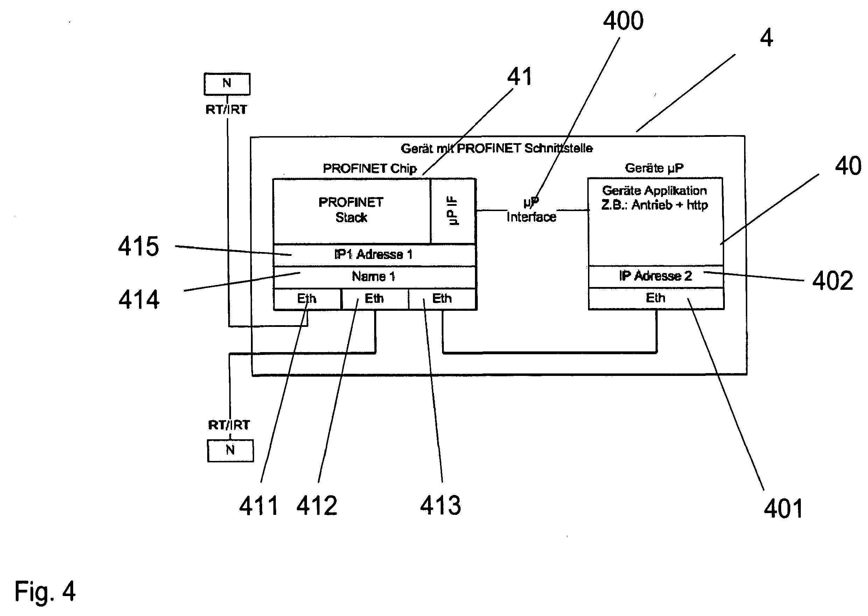

In der Figur 4 ist ein PROFINET Gerät 4 dargestellt, dass einen Mikrokontroller 40 und PROFINET Adapter 41 besitzt, die zum Beispiel als integrierte Bauelemente auf einer Leiterplatte angeordnet sein können. Der Mikrokontroller 40 stellt die eigentliche Geräteapplikation des PROFINET Geräts 4 bereit, z.B. eine Ansteuerung eines Antriebs. Der PROFINET Adapter 41 und der Mikrokontroller 40 sind über eine Schnittstelle 400 miteinander verbunden. Der PROFINET Adapter 41 umfasst eine erste und eine zweite Ethernet-Schnittstelle 411 und 412 zur Anbindung an das PROFINET Netzwerk. Ferner beinhaltet der PROFINET Adapter 41 einen PROFINET Protokoll-Stack, mit dem die Daten zwischen dem PROFINET Netzwerk und Schnittstelle 400 umgesetzt werden können. Der PROFINET Adapter 41 besitzt neben einer MAC-Adresse einen symbolischen PROFINET Namen 414, über den eine IP-Adresse 415 zugewiesenen werden kann.

Die I/O-Daten beispielsweise zur Steuerung eines Antriebs werden in der Regel als Echtzeit-Daten zwischen PROFINET Netzwerk und dem PROFINET Gerät 4 übertragen, wobei die RT- oder IRT-Datenpakete über die MAC-Adresse des PROFINET Adapters 41 adressiert werden.

Parameterdaten zur Konfiguration des Mikrokontrollers werden in der Regel als NRT-Datenpakete mittels TCP/IP basierter Übertragung über das PROFINET Netzwerk übertragen. Die TCP/IP-Datenpakete können beispielsweise an die IP-Adresse des PROFINET Adapters 41 adressiert werden, so dass die enthaltenen Parameterdaten über die Schnittstelle 400 an den Mikrokontroller 40 übertragen werden können.

Viele Mikrokontroller besitzen bereits eine integrierte Ethernet-Schnittstelle 401, so dass die Mikrokontroller direkt mit einer TCP/IP basierten Kommunikation Daten mit dem PROFINET Netzwerk austauschen könnten. Der PROFINET Chip 41 des in der Figur 4 dargestellten PROFINET Geräts 4 besitzt dazu eine dritte Ethernet-Schnittstelle 413, über die eine direkte Ethernetverbindung zum Mikrokontroller 40 bereitgestellt wird. Der Mikrocontroller 40 besitzt eine IP-Adresse 402 für die TCP/IP basierte Datenkommunikation.

Wie bei der Einbindung eines Industrie PC in ein PROFINET Netzwerk stellt sich bei dem PROFINET Gerät 4 das Problem, dass zur direkten TCP/IP basierten Kommunikation mit dem Mikrokontroller 40 eine zusätzliche IP-Adresse im PROFINET Netzwerk verwaltet werden und über geeignete Mechanismen zugewiesen werden muss.

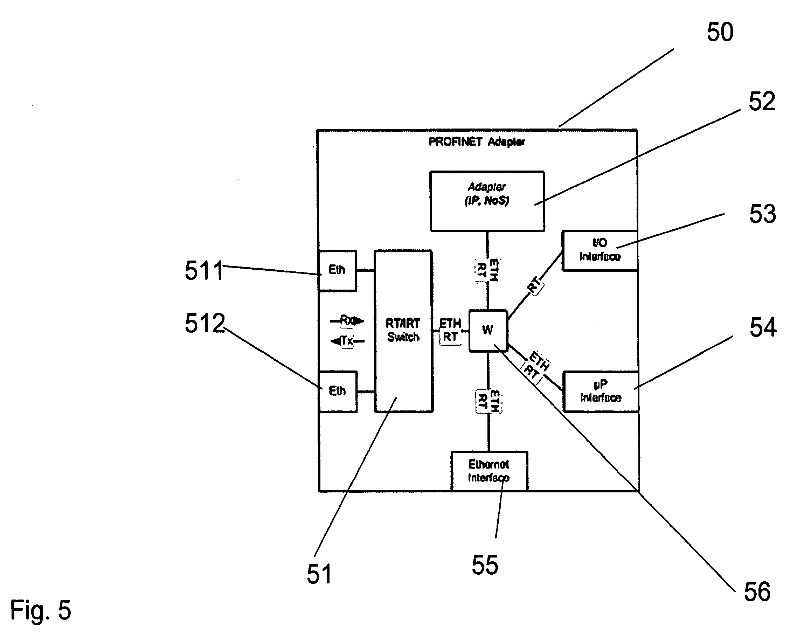

In der Figur 5 ist ein erfindungsgemäßer PROFINET Adapter 50 dargestellt, der einen PROFINET RT/IRT fähigen Switch 51 mit einer ersten und zweiten Ethernet-Schnittstelle 511 und 522 besitzt, über die jeweils eine Netzwerkverbindung zu einem vorhergehenden und zu einem nachfolgenden Teilnehmer in einem PROFINET Netzwerk herstellbar ist.

Im erfindungsgemäßen PROFINET Adapter 50 ist ein PROFINET Protokoll Protokoll-Stack 52 implementiert. Des Weiteren verfügt der erfindungsgemäße PROFINET Adapter 50 z.B. über eine I/O-Schnittstelle 53, eine Mikroprozessor-Schnittstelle 54 und eine dritte Ethernet-Schnittstelle 55.

Kern des erfindungsgemäßen PROFINET Adapters 50 ist eine Weiche 56, über die alle Datenpakete geleitet werden, die von dem PROFINET Adapter 50 empfangen oder gesendet werden. Diese Datenpakete können sowohl RT- oder IRT-Daten, als auch NRT-Daten enthalten. Der PROFINET Adapter 50 ist über seinen symbolischen PROFINET Namen, über seine IP-Adresse oder über seine MAC-Adresse adressierbar. Der PROFINET Protokoll-Stack 52 steht mit der Weiche 56 in direkter Verbindung.

Die Weiche 56 ist dazu ausgebildet, die RT-, IRT- und NRT-Datenpakete und/oder die entsprechenden Daten zwischen dem Switch 51 und den entsprechenden Schnittstellen 53, 54 und 55 und dem PROFINET Protokoll-Stack 52 aufzuteilen.

Die PROFINET RT-Datenpakete werden vom Switch 51 zur I/O-Schnittstelle 53, zur Mikroprozessor-Schnittstelle 54, zur dritten Ethernet-Schnittstelle 55 übertragen und/oder vom PROFINET Protokoll-Stack 52 verarbeitet. Dabei ist die Weiche 56 so konfigurierbar, dass alle Schnittstellen einzeln zu oder abgeschaltet werden können.

Umgekehrt können die PROFINET RT-Datenpakete vom PROFINET Protokoll-Stack 52, von der I/O-Schnittstelle 53, von der Mikroprozessor-Schnittstelle 54 oder von der dritten Ethernet-Schnittstelle 55 zum Switch 51 übertragen werden. Die Schnittstellen können durch die Konfiguration der Weiche 56 einzeln zu oder abgeschaltet bzw. unterschiedlich priorisiert werden.

Ebenso können die NRT-Datenpakete vom Switch 51 zur Mikroprozessor-Schnittstelle 54, zur dritten Ethernet-Schnittstelle 55 übertragen und/oder von dem PROFINET Protokoll-Stack 52 verarbeitet werden. Umgekehrt können die NRT-Datenpakete von der Mikroprozessor-Schnittstelle 54, der dritten Ethernet-Schnittstelle 55 und vom PROFINET Protokoll-Stack 52 zum Switch 51 übertragen werden. Die Weiche 56 ist auch in Bezug auf die Verteilung von NRT-Datenpaketen so konfigurierbar, dass alle Quellen einzeln zu oder abgeschaltet werden können. Darüber hinaus kann die Priorität der einzelnen Quellen festgelegt werden.

Die von der dritten Ethernet-Schnittstelle 55 stammenden RT und/oder NRT-Datenpakete werden in der Weiche 53 jeweils mit der MAC-Adresse des PROFINET Adapters 50 versehen. Ein an die dritte Ethernet-Schnittstelle 55 des PROFINET Adapters 50 angeschlossenes Gerät kann die IP-Adresse des Adapters (z.B. über DHCP) ermitteln und seine eigene IP-Adresse auf diese Adresse einstellen. Entsprechend kann ergänzend oder alternativ einem an der dritten Ethernet-Schnittstelle 55 des PROFINET Adapters 50 anschließbaren ethernetkommunikationsfähigen Gerät auch ein PROFINET Gerätenamen zugewiesen werden, der dem PROFINET Gerätenamen des PROFINET Adapters 50 entspricht.

Die zwischen dem Switch 51 und der Ethernet-Schnittstelle 55 übertragenen Daten können von der Weiche frei konfigurierbar verarbeitet werden. Dadurch ist z.B. die Fragmentierung und Defragmentierung der Ethernet Daten denkbar.

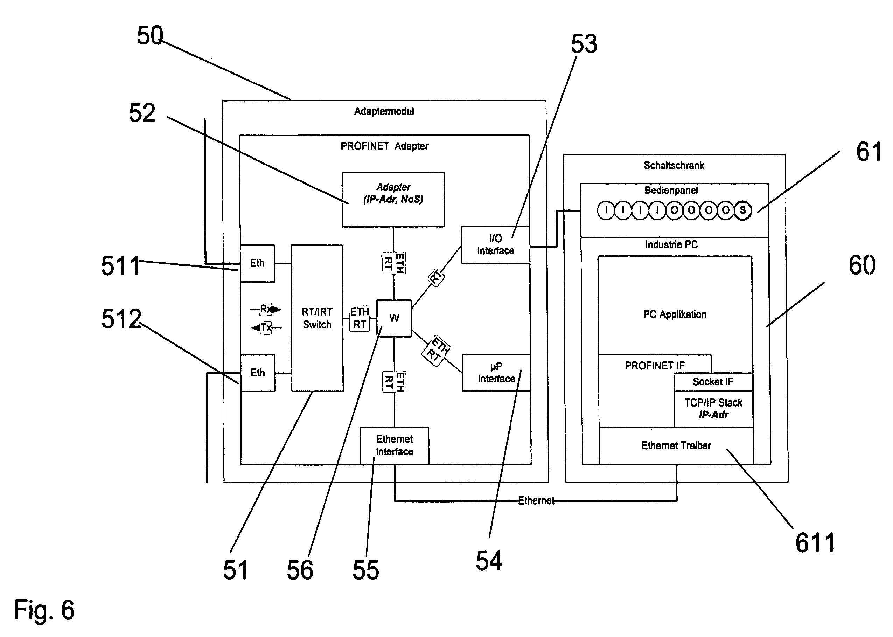

In der Figur 6 ist ein Industrie PC 60 und eine Bedientafel 61 dargestellt, die über einen erfindungsgemäßen PROFINET Adapter 50 mit einem PROFINET Netzwerk verbunden sind. Die Bedientafel 61 ist an der I/O-Schnittstelle 53 des PROFINET Adapters 50 angeschlossen. Die Ein- und Ausgänge der I/O-Schnittstelle 53, die mit den Bedienelementen der Bedientafel 61 verbunden sind, können sichere und/oder nicht sichere Ein- und Ausgänge sein. Der Industrie PC 60 besitzt eine Ethernet-Schnittstelle 611, die mit der dritten Ethernet-Schnittstelle 55 des PROFINET Adapters 50 verbunden ist.

Die RT-Datenpakete zur Ansteuerung der I/O-Schnittstelle 53 werden von der Weiche 56 an den PROFINET Protokoll-Stack 52 geleitet. Die Echtzeitdaten werden an die I/O-Schnittstelle 53 weiter geleitet.

Der Industrie PC 60 ist über die IP-Adresse des PROFINET Adapters direkt erreichbar, wobei die TCP/IP basierten NRT-Datenpakete von der Weiche 56 über die dritte Ethernet-Schnittstelle 55 an die Ethernet-Schnittstelle 611 des Industrie PC geleitet werden. Die von dem Industrie PC 61 zu versendenden TCP/IP basierten NRT-Datenpakete werden bereits im TCP/IP-Stack des Industrie PC mit der IP-Adresse des PROFINET Adapters 50 versehen und über die Weiche 56 und den Switch 51 an das PROFINET Netzwerk gesendet. Es ist keine getrennte Einstellung der IP-Adresse am Industrie PC erforderlich, da der Industrie PC automatisch auf die IP-Adresse des PROFINET Adapters 50 eingestellt worden ist. Die automatische Einstellung der IP-Adresse erfolgt z.B. mittels DHCP zwischen dem PROFINET Adapter 50 und dem Industrie PC 60. In entsprechender Weise kann der Industrie PC automatisch z.B. auch auf den symbolischen Namen bzw. PROFINET Gerätenamen des PROFINET Adapters 50 eingestellt worden sein.

Ein Vorteil bei einer Ankopplung eines Industrie PC an ein PROFINET Netzwerk über einen erfindungsgemäßen PROFINET Adapter 50 ist, dass beim Austausch eines PC die Funktion der PROFINET Linie nicht beeinträchtigt wird. Des Weiteren bietet diese Ankopplung eine Einsparung eines eigenen I/O-Moduls mit entsprechenden Kosten und dem Adressierungsaufwand. Durch eine Fragmentierung der RT/IRT und NRT-Datenpakete in der Weiche wird der Jitter in der Linie reduziert. Darüber hinaus sind dadurch kürzere Zykluszeiten im PROFINET Netzwerk denkbar, da die Übertragung eines 1,5 kByte großen Ethernet-Datenpaketen bei 100 MBit/s ca. 125 *µ*s in Anspruch nimmt. Kleinere Zykluszeiten sind somit ohne Fragmentierung nicht möglich.

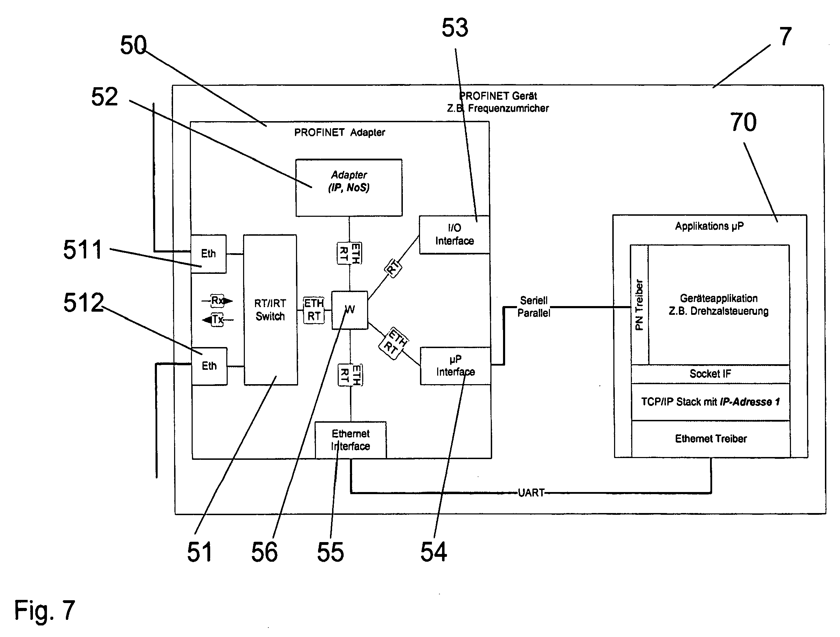

In der Figur 7 ist ein PROFINET Gerät 7 dargestellt, dass einen Mikroprozessor 70, z.B. eine Mikrokontroller, und einen erfindungsgemäßen PROFINET Adapter 50 besitzt. Der Mikroprozessor 70 ist über die Mikroprozessor-Schnittstelle 54 mit dem PROFINET Adapter 50 verbunden, über die PROFINET Echtzeit- und Nicht-Echtzeitdaten austauschbar sind.

Soll auf der Mikroprozessor 70 zusätzlich eine TCP/IP Applikation ausgeführt werden (z.B. die WEB-Visualisierung der Drehzahl eines Antriebs), dann kann einfach über eine vorhandene TCP/IP basierte Ethernet-Schnittstelle erfolgen. Der erfindungsgemäße PROFINET Adapter stellt eine sehr einfache und kostengünstige Möglichkeit zur Ankopplung dar und zeichnet sich insbesondere dadurch aus, dass bei dem Mikroprozessor 70 keine Anpassung des TCP/IP-Stack an das PROFINET erforderlich ist. Darüber hinaus ist eine TCP/IP Applikation des Mikroprozessors 70 unter der IP-Adresse des PROFINET Adapters erreichbar.

## Patentansprüche

1. PROFINET Adapter, umfassend
einen Switch (51) mit wenigstens einer ersten und einer zweiten Ethernet-Schnittstelle (511, 512) zum Verbinden mit einem echtzeitfähigen PROFINET Netzwerk, einen PROFINET Protokoll-Stack (52) und eine Anzahl von wenigstens einer Anwendungsschnittstelle (53, 54), ferner umfassend eine dritte Ethernet-Schnittstelle (55), wobei die dritte Ethernet-Schnittstelle zumindest zum Austausch von ethernetbasierten Datenpaketen ausgebildet ist, **dadurch gekennzeichnet, dass** eine Weiche (56) mit dem Switch (51), dem PROFINET Protokoll-Stack (52), den Anwendungsschnittstellen (53, 54) und der dritten Ethernet-Schnittstelle (55) verbunden ist und dazu ausgebildet ist, Echtzeitdatenpakete und Nicht-Echtzeitdatenpakete entsprechend einer vorbestimmten Konfiguration aufzuteilen und zwischen dem Switch (51) und den Anwendungsschnittstellen (53, 54) und/oder der dritten Ethernet-Schnittstelle (55) zu übertragen.

2. PROFINET Adapter nach vorstehendem Anspruch, **dadurch gekennzeichnet, dass** eine erste der wenigstens einen Anwendungsschnittstellen eine I/O-Schnittstelle (53) ist.

3. PROFINET Adapter nach vorstehendem Anspruch, **dadurch gekennzeichnet, dass** die Weiche (56) konfiguriert ist, die I/O Daten eines Echtzeitdatenpakets, das an den PROFINET Adapter adressiert ist, zwischen dem Switch (51) und der I/O-Schnittstelle (53) zu übertragen.

4. PROFINET Adapter nach einem der vorstehenden Ansprüche, **dadurch gekennzeichnet, dass** die Weiche (56) konfiguriert ist, ein an den PROFINET Adapter adressiertes Nicht-Echtzeitdatenpaket an die dritte Ethernet-Schnittstelle (55) zu übertragen.

5. PROFINET Adapter nach vorstehendem Anspruch, **dadurch gekennzeichnet, dass** das Nicht-Echtzeitdatenpaket ein ethernetbasiertes Datenpaket ist.

6. PROFINET Adapter nach einem der vorstehenden Ansprüche, **dadurch gekennzeichnet, dass** der PROFINET Adapter ausgebildet ist, einem an der dritten Ethernet-Schnittstelle (55) anschließbaren ethernetkommunikationsfähigen Gerät eine IP-Adresse zuzuweisen, die einer eigenen IP-Adresse entspricht.

7. PROFINET Adapter nach einem der vorstehenden Ansprüche, **dadurch gekennzeichnet, dass** der PROFINET Adapter ausgebildet ist, einem an der dritten Ethernet-Schnittstelle (55) anschließbaren ethernetkommunikationsfähigen Gerät einen PROFINET Gerätenamen zuzuweisen, der dem eigenen PROFINET Gerätenamen entspricht.

8. PROFINET Adapter nach einem der vorstehendem Anspruch, **dadurch gekennzeichnet, dass** die Weiche (56) ausgebildet ist, ein Nicht-Echtzeitdatenpaket von der dritten Ethernet-Schnittstelle (55) an den Switch zu übertragen.

9. Verfahren zum Übertragen von Echtzeitdatenpaketen und Nicht-Echtzeitdatenpaketen zwischen einem Switch (51) und wenigstens einer Anwendungsschnittstelle (53, 54) und/oder der dritten Ethernet-Schnittstelle (55) eines PROFINET Adapters gemäß einem der Ansprüche 1 bis 6, wobei die Echtzeitdatenpakete und die Nicht-Echtzeitdatenpakete durch eine Weiche (56) aufgeteilt werden.

10. Verfahren nach Anspruch 9, **dadurch gekennzeichnet, dass** die Echtzeitdatenpakete an die Anwendungsschnittstellen (53, 54) übertragen werden.

11. Verfahren nach einem der Ansprüche 9 oder 10, **dadurch gekennzeichnet, dass** die Echtzeitdatenpakete von dem Switch (51) an die dritte Ethernet-Schnittstelle (55) übertragen werden.

12. Verfahren nach einem der Ansprüche 9 bis 11, **dadurch gekennzeichnet, dass** die Nicht-Echtzeitdatenpakete von dem Switch (51) an die dritte Ethernet-Schnittstelle (55) übertragen werden.

13. Verfahren nach Anspruch 12, **dadurch gekennzeichnet, dass** die Nicht-Echtzeitdatenpakete ethernetbasierteDatenpakete sind, die an die dritte Ethernet-Schnittstelle (55) übertragen werden.

14. Verfahren nach einem der Ansprüche 9 bis 13, **dadurch gekennzeichnet, dass** die Nicht-Echtzeitdatenpakete von der dritten Ethernet-Schnittstelle (55) an dem Switch (51) übertragen werden.

15. Verfahren nach Anspruch 14, **dadurch gekennzeichnet, dass** eine IP-Adresse der PROFINET Adapters als Quell-Adresse für die Nicht-Echtzeitdatenpakete verwendet wird.

## Claims

1. A PROFINET adapter comprising
a switch (51) having at least one first and one second Ethernet interface (511, 512) for connecting to a real-time-enabled PROFINET network, a PROFINET protocol stack (52) and a number of at least one application interface (53, 54), further comprising a third Ethernet interface (55), wherein the third Ethernet interface is designed at least to exchange Ethernet-based data packets, **characterized in that** a splitter (56) is connected to the switch (51), the PROFINET protocol stack (52), the application interfaces (53, 54) and the third Ethernet interface (55), and is designed to divide real-time data packets and near real-time data packets according to a predetermined configuration and to transmit them between the switch (51) and the application interfaces (53, 54) and/or the third Ethernet interface (55).

2. The PROFINET adapter as claimed in the preceding claim, **characterized in that** a first of the at least one application interfaces is an I/O interface (53).

3. The PROFINET adapter as claimed in the preceding claim, **characterized in that** the splitter (56) is configured to transmit the I/O data of a real-time data packet, which is addressed to the PROFINET adapter, between the switch (51) and the I/O interface (53).

4. The PROFINET adapter as claimed in one of the preceding claims, **characterized in that** the splitter (56) is configured to transmit a near real-time data packet, which is addressed to the PROFINET adapter, to the third Ethernet interface (55).

5. The PROFINET adapter as claimed in the preceding claim, **characterized in that** that the near real-time data packet is an Ethernet-based data packet.

6. The PROFINET adapter as claimed in one of the preceding claims, **characterized in that** the PROFINET adapter is designed to assign an IP address which is the same as its own IP address to an Ethernet-communications-enabled device which can be connected to the third Ethernet interface (55).

7. The PROFINET adapter as claimed in one of the preceding claims, **characterized in that** the PROFINET adapter is designed to assign a PROFINET device name which is the same as its own PROFINET device name to an Ethernet-communications-enabled device which can be connected to the third Ethernet interface (55).

8. The PROFINET adapter as claimed in one of the preceding claims, **characterized in that** the splitter (56) is designed to transmit a near real-time data packet from the third Ethernet interface (55) to the switch.

9. A method for transmitting real-time data packets and near real-time data packets between a switch (51) and at least one application interface (53, 54) and/or the third Ethernet interface (55) of a PROFINET adapter as claimed in one of claims 1 to 6, wherein the real-time data packets and the near real-time data packets are divided by means of a splitter (56).

10. The method as claimed in claim 9, **characterized in that** the real-time data packets are transmitted to the application interfaces (53, 54).

11. The method as claimed in one of claims 9 or 10, **characterized in that** the real-time data packets are transmitted from the switch (51) to the third Ethernet interface (55).

12. The method as claimed in one of claims 9 to 11, **characterized in that** the near real-time data packets are transmitted from the switch (51) to the third Ethernet interface (55),

13. The method as claimed in claim 12, **characterized in that** the near real-time packets are Ethernet-based data packets which are transmitted to the third Ethernet interface (55).

14. The method as claimed in one of claims 9 to 13, **characterized in that** the near real-time data packets are transmitted from the third Ethernet interface (55) to the switch (51).

15. The method as claimed in claim 14, **characterized in that** an IP address of the PROFINET adapter is used as the source address for the near real-time data packets.

## Revendications

1. Adaptateur PROFINET, comprenant un commutateur (51) avec au moins une première et une deuxième interface Ethernet (511, 512) pour la connexion à un réseau PROFINET en temps réel, une pile de protocoles PROFINET (52) et un nombre d'au moins une interface d'application (53,54), comprenant en outre une troisième interface Ethernet (55), ladite troisième interface Ethernet étant réalisée au moins pour échanger des paquets de données basés Ethernet, **caractérisé en ce qu'**un aiguillage (56) est relié au commutateur (51), à la pile de protocoles PROFINET (52), aux interfaces d'application (53, 54) et à la troisième interface Ethernet (55) et est prévu pour répartir des paquets de données en temps réel et des paquets de données non en temps réel en fonction d'une configuration définie et pour les transmettre entre le commutateur (51) et les interfaces d'application (53, 54) et/ou la troisième interface Ethernet (55).

2. Adaptateur PROFINET selon la revendication précédente, **caractérisé en ce qu'**une première des au moins une interface d'application est une interface I/O (53).

3. Adaptateur PROFINET selon la revendication précédente, **caractérisé en ce que** l'aiguillage (56) est configuré pour transmettre entre le commutateur (51) et l'interface I/O (53) les données I/O d'un paquet de données en temps réel adressé à l'adaptateur PROFINET.

4. Adaptateur PROFINET selon l'une des revendications précédentes, **caractérisé en ce que** l'aiguillage (56) est configuré pour transmettre, à la troisième interface Ethernet (55), un paquet de données non en temps réel adressé à l'adaptateur PROFINET.

5. Adaptateur PROFINET selon la revendication précédente, **caractérisé en ce que** le paquet de données non en temps réel est un paquet de données basé Ethernet.

6. Adaptateur PROFINET selon l'une des revendications précédentes, ledit adaptateur PROFINET étant **caractérisé en ce qu'**il est prévu pour attribuer à un appareil apte à une communication Ethernet, connectable à la troisième interface Ethernet (55), une adresse IP correspondant à une adresse IP propre.

7. Adaptateur PROFINET selon l'une des revendications précédentes, ledit adaptateur PROFINET étant **caractérisé en ce qu'**il est prévu pour attribuer à un appareil apte à une communication Ethernet, connectable à la troisième interface Ethernet (55), un nom d'appareil PROFINET correspondant au nom d'appareil PROFINET propre.

8. Adaptateur PROFINET selon l'une des revendications précédentes, **caractérisé en ce que** l'aiguillage (56) est prévu pour transmettre un paquet de données non en temps réel de la troisième interface Ethernet (55) au commutateur.

9. Procédé de transmission de paquets de données en temps réel et de paquets de données non en temps réel entre un commutateur (51) et au moins une interface d'application (53, 54) et/ou la troisième interface Ethernet (55) d'un adaptateur PROFINET selon l'une des revendications 1 à 6, dans lequel les paquets de données en temps réel et les paquets de données non en temps réel sont répartis par un aiguillage (56).

10. Procédé selon la revendication 9, **caractérisé en ce que** les paquets de données en temps réel sont transmis aux interfaces d'application (53, 54).

11. Procédé selon la revendication 9 ou 10, **caractérisé en ce que** les paquets de données en temps réel sont transmis du commutateur (51) à la troisième interface Ethernet (55),

12. Procédé selon l'une des revendications 9 à 11, **caractérisé en ce que** les paquets de données non en temps réel sont transmis du commutateur (51) à la troisième interface Ethernet (55).

13. Procédé selon la revendication 12, **caractérisé en ce que** les paquets de données non en temps réel sont des paquets de données basés Ethernet qui sont transmis à la troisième interface Ethernet (55).

14. Procédé selon l'une des revendications 9 à 13, **caractérisé en ce que** les paquets de données non en temps réel sont transmis de la troisième interface Ethernet (55) au commutateur (51).

15. Procédé selon la revendication 14, **caractérisé en ce qu'**une adresse IP de l'adaptateur PROFINET est utilisée comme adresse source pour les paquets de données non en temps réel.
